# FASCICULE DE BREVET EUROPEEN

(11) **EP 4 045 783 B1**
(45) Date de publication et mention de la délivrance du brevet: **04.09.2024**
(21) Numéro de dépôt: 20785513.1
(22) Date de dépôt: 06.10.2020
(51) Int. Cl.: F02D 41/00, F02D 41/04, F02D 41/10, F02D 41/14

(54) **PROCÉDÉ DE GESTION DU COUPLE D'UN VEHICULE AUTOMOBILE COMPORTANT UN MOTEUR À COMBUSTION INTERNE**
VERFAHREN ZUR STEUERUNG DES DREHMOMENTS EINES KRAFTFAHRZEUGS MIT EINEM VERBRENNUNGSMOTOR
METHOD FOR MANAGING THE TORQUE OF A MOTOR VEHICLE COMPRISING AN INTERNAL COMBUSTION ENGINE

(30) Priorité: 16.10.2019 FR 1911540
(43) Date de publication de la demande: 24.08.2022
(73) Titulaire: NEW H POWERTRAIN HOLDING, S.L.U., 47008 Valladolid (ES)
(72) Inventeur: THUILLIER, Laurent, 91220 Brétigny sur orge (FR)
(74) Mandataire: Renault Group
(86) Numéro de dépôt international: PCT/EP2020/077955
(87) Numéro de publication internationale: WO 2021/073948

(56) Documents cités:
- DE-A1- 102005 047 590
- DE-A1- 102016 212 945
- FR-A1- 2 819 017
- US-A1- 2012 117 962
- US-B2- 8 255 140

## Description

La présente invention concerne, de manière générale, la suralimentation d'un dispositif de traction comprenant un moteur à combustion interne équipé d'un turbocompresseur.

En particulier, l'invention se rapporte à un procédé de gestion du couple d'un véhicule automobile comprenant un moteur à combustion interne équipé d'un turbocompresseur.

Le fonctionnement d'un moteur à combustion interne repose sur la combustion d'un mélange d'air et de carburant. Sa puissance dépend de la quantité de carburant brûlé pendant un cycle, et par conséquent de la capacité de remplissage de ses cylindres.

Le rendement et les performances du moteur peuvent être augmentés par suralimentation, c'est-à-dire par l'accroissement de la quantité d'air admise dans les cylindres.

La suralimentation est classiquement assurée par un turbocompresseur. Le turbocompresseur comprend une turbine entraînée en rotation par les gaz d'échappement du moteur ainsi qu'un compresseur entraîné par la turbine. Le compresseur augmente la pression Pcol dans le collecteur d'admission et permet ainsi d'augmenter le débit massique d'air entrant dans les cylindres.

Certains moteurs équipés de turbocompresseur utilisent une fonction de surcouple, dite « over-torque », consistant à augmenter temporairement leur couple maximum sans toutefois provoquer d'endommagement de l'intégrité des éléments du dispositif de traction.

Parmi les contraintes thermomécaniques atteintes lors de l'activation de cette fonction, la température en amont de la turbine du flux des gaz d'échappement dans le collecteur est l'une des plus limitantes.

Il est connu de prédéterminer le couple maximal du moteur sur une valeur engendrant une température en amont de la turbine maximale qui ne présente pas de risque d'endommagement, par exemple de DE 10 2005 047590 A1.

La température en amont de la turbine est facilement mesurée, par un capteur, et c'est pourquoi elle est utilisée dans cette méthode existante.

Cependant, la tenue mécanique de la turbine est en réalité dépendante de la température au coeur de la turbine, c'est-à-dire de la température de la matière de la turbine.

Or, cette température matière présente une inertie et atteint sa limite thermomécanique bien après la stabilisation de la température en amont de la turbine Tavt du flux des gaz d'échappement.

Il est donc nécessaire de prendre en considération cette inertie lors de l'utilisation de la fonction de surcouple afin de ne pas endommager la turbine et les éléments environnants.

L'invention a donc pour but de remédier à ces inconvénients et de proposer un procédé permettant d'optimiser les performances du moteur à combustion interne par l'engagement d'une fonction de surcouple tout en assurant l'intégrité des éléments du dispositif de traction, en particulier la turbine et le collecteur d'échappement, de façon plus fiable.

Il est donc proposé un procédé de gestion du couple d'un moteur à combustion interne de véhicule automobile comportant un turbocompresseur, comprenant les étapes successives suivantes :
la détermination d'une consigne de couple initiale associée à une température initiale en amont de la turbine du turbocompresseur et résultant d'un enfoncement initial de la pédale d'accélérateur ;
l'application d'une quantité de carburant injecté dans les cylindres du moteur et d'une pression dans le collecteur d'admission, répondant à la consigne de couple initiale et ;
la détermination d'une consigne de couple maximal associée à une température maximale admissible en amont de la turbine du turbocompresseur prédéterminée et résultant d'un enfoncement maximal Emax de la pédale d'accélération ;
l'application d'une quantité de carburant et d'une pression répondant à la consigne de couple maximal, et le calcul de l'écart entre la température maximale admissible en amont de la turbine et la température initiale en amont de la turbine ;
lorsque l'écart est supérieur ou égal à un seuil prédéterminé, l'application d'une quantité de carburant et d'une pression correspondant à une consigne de couple ajustée supérieure à la consigne de couple maximal pendant une première durée prédéterminée ;
la consigne de couple ajustée Ca et la première durée étant prédéterminées de sorte que pendant la première durée, la température matière au coeur de la turbine ne dépasse pas la température maximale admissible en amont de la turbine ; et
lorsque la première durée est écoulée, la consigne de couple ajustée est ramenée à la consigne de couple maximal tant qu'un enfoncement maximal de la pédale d'accélérateur est détecté.

Selon un premier mode de réalisation, lorsque la première durée est écoulée, la consigne de couple est ramenée de façon progressive par rampage à la consigne de couple maximal en une deuxième durée prédéterminée.

Selon un deuxième mode de réalisation, lorsque la première durée est écoulée, la consigne de couple est ramenée immédiatement à la consigne de couple maximal.

De préférence, la consigne de couple ajustée et la première durée sont prédéterminées de sorte que pendant la première durée, la température matière au coeur de la turbine ne dépasse pas une température égale à la température maximale admissible en amont de la turbine à laquelle est retranchée une marge prédéterminée.

Avantageusement, le procédé peut comprendre la mesure en temps réel de la valeur de la température en amont de la turbine et, si la valeur mesurée est supérieure à la température en amont de la turbine maximale admissible lorsque la consigne de couple ajustée est appliquée, la consigne de couple est immédiatement ramenée à la consigne de couple maximale.

De préférence, les étapes sont répétées tout au long du roulage du véhicule automobile.

Les étapes sont contrôlées par un calculateur.

D'autres buts, avantages et caractéristiques ressortiront de la description qui va suivre, donnée à titre purement illustratif et faite en référence aux dessins annexés sur lesquels :
- La figure 1 illustre un dispositif de traction pour véhicule automobile comprenant un moteur à combustion interne équipé d'un turbocompresseur.
- La figure 2 est un logigramme illustrant un procédé de gestion du couple d'un moteur à combustion de véhicule automobile comportant un turbocompresseur, conforme à l'invention.

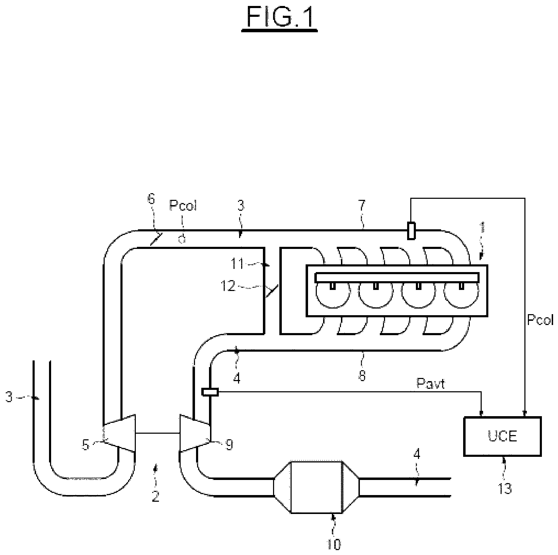

La figure 1 illustre un dispositif de traction pour véhicule automobile comprenant un moteur à combustion 1 et un turbocompresseur 2.

Dans l'exemple illustré, le moteur est un moteur diesel à quatre cylindres comprenant un turbocompresseur à géométrie variable.

Chaque cylindre est avantageusement équipé d'un injecteur pour l'injection de carburant dans le moteur.

Un circuit d'admission 3 permet l'admission d'air dans les cylindres du moteur 1 et un circuit d'échappement 4 permet l'échappement des gaz produits après combustion.

Un compresseur 5 du turbocompresseur est disposé en amont des cylindres et est configuré pour comprimer l'air qui le traverse dans le but d'augmenter la quantité d'air admise dans les cylindres.

Un volet d'admission 6 permet de contrôler l'admission d'air dans un collecteur d'admission 7 du circuit d'admission 3 où règne une pression de suralimentation P_{col}.

Après combustion, les gaz d'échappement sortent dans un collecteur d'échappement 8 du circuit d'échappement 4 et se dirigent vers une turbine 9 du turbocompresseur, disposée en aval des cylindres et configurée pour détendre l'air qui la traverse.

Avantageusement, est également disposé un dispositif de dépollution tel qu'un filtre à particules 10, en aval de la turbine 9.

Par ailleurs, le moteur 1 est en outre associé à un circuit 11 de recirculation des gaz d'échappement, servant à réinjecter une partie de ces gaz dans le collecteur d'admission 7 de manière à, en particulier, limiter la quantité d'oxyde d'azote produit tout en évitant la formation de fumée dans les gaz d'échappement. Ce circuit 11 comporte avantageusement une électrovanne 12 qui permet de contrôler le débit de gaz d'échappement recirculés.

De préférence, une unité de commande électronique UCE, désignée par la référence numérique 13, récupère des signaux Pcol et Pavt de mesure de la pression régnant respectivement dans le collecteur d'admission et en amont de la turbine 9 du turbocompresseur 2, délivrés par des capteurs de mesure appropriés prévus à cet effet (non représentés). Elle agit sur un organe de réglage de la puissance des gaz d'échappement, par exemple une soupape de décharge ou sur les ailettes de la turbine 9 de manière à réguler la valeur de la pression régnant dans le collecteur d'admission 7 et en amont de la turbine 9 autour de valeurs de consigne respectives.

Dans l'exemple illustré, l'unité UCE 13 assure également le contrôle de fonctionnement du moteur, de manière connue en soi. Elle agit en particulier sur l'électrovanne 12 pour régler la quantité de gaz recirculés et règle le point de fonctionnement du moteur.

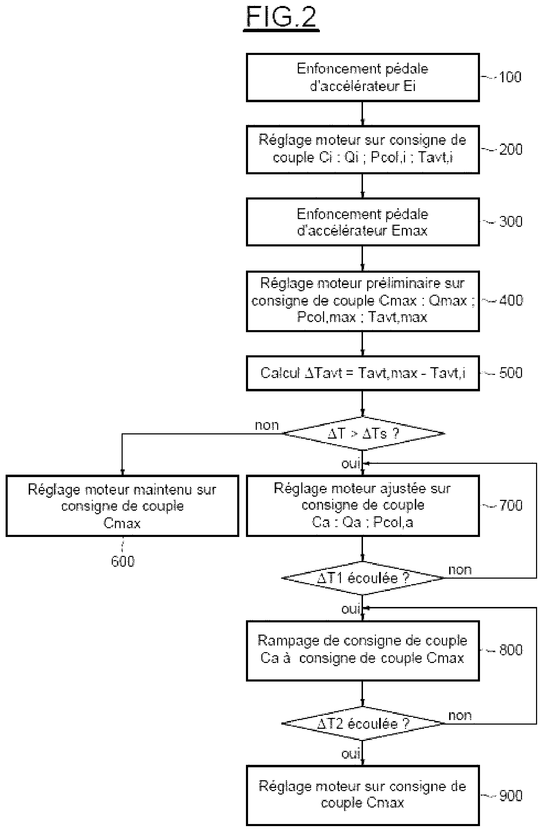

Par ailleurs, la figure 2 illustre un procédé de gestion du couple d'un moteur à combustion interne, tel que le moteur 1, conforme à l'invention.

Lors du roulage du véhicule, le conducteur appuie sur la pédale d'accélérateur et la valeur du couple résultant dépend du degré d'enfoncement de la pédale.

Lorsque la pédale d'accélérateur est enfoncée selon un enfoncement initial Ei, une consigne de couple initiale Ci correspondant à cet enfoncement doit être appliquée au moteur 1.

Par enfoncement initial Ei, on entend un enfoncement de degré inférieur à un enfoncement maximal Emax de la pédale d'accélérateur ou « pied à fond ».

Aussi, par consigne de couple initiale Ci, on entend alors une consigne de couple inférieur à une consigne de couple maximal Cmax.

Le procédé de gestion comprend la détermination 100 d'une consigne de couple initial Ci lorsque la pédale d'accélérateur est enfoncée selon un enfoncement initial Ei.

La consigne de couple initiale Ci est associée à une température initiale en amont de la turbine du turbocompresseur Tavt,i. En d'autres termes, lorsque la consigne de couple initiale Ci est appliquée, la température en amont de la turbine est amenée à atteindre une température initiale Tavt,i.

Pour répondre à la consigne de couple initiale Ci, une quantité de carburant Qi injecté dans les cylindres du moteur 1 et une pression Pcol,i dans le collecteur d'admission 7 sont appliquées selon une étape 200.

Lorsque la pédale d'accélérateur est enfoncée selon un enfoncement maximal Emax, une consigne de couple maximal Cmax associée à cet enfoncement maximal est alors déterminée dans une étape 300 du procédé.

La consigne de couple maximal Cmax est associée à une température maximale admissible en amont de la turbine du turbocompresseur Tavt,max.

La température maximale admissible Tavt,max est prédéterminée, et correspond à une température en amont de la turbine du turbocompresseur au-delà de laquelle des dommages du dispositif de traction, en particulier de la turbine 9 et du collecteur d'échappement 8, peuvent survenir et qu'il est donc préférable de ne pas dépasser.

Pour répondre à la consigne de couple maximal Cmax, une quantité de carburant Qmax injecté dans les cylindres du moteur 1 et une pression Pcol,max dans le collecteur d'admission 7 sont appliquées selon une étape 400.

Une fois que la consigne de couple maximal Cmax est appliquée, l'écart entre la température maximale admissible en amont de la turbine Tavt,max et la température initiale en amont de la turbine Tavt,i est calculé dans une étape 500.

Si l'écart calculé est inférieur à un seuil prédéterminé ΔTs, la consigne de couple maximal Cmax est maintenue inchangée, selon une étape 600. En effet, la marge d'exploitation de la différence de température entre la température des composants de l'échappement et la température des gaz d'échappement est trop faible.

En revanche, si l'écart calculé est supérieur ou égal au seuil prédéterminé ΔTs, la consigne de couple en cours, c'est-à-dire une consigne de couple maximale Cmax, est ajustée dans une étape 700. Une consigne de couple ajustée Ca, supérieure à la consigne de couple maximal Cmax, est appliquée pendant une première durée Δt1 prédéterminée.

Afin de répondre à cette consigne de couple ajustée Ca, une quantité de carburant Qa et une pression Pcol,a correspondant à cette consigne sont appliquées.

La consigne de couple ajustée Ca et la première durée Δt1 sont prédéterminées de sorte que pendant cette première durée Δt1, la température matière au coeur de la turbine ne dépasse pas la température maximale admissible en amont de la turbine Tavt,max pour ne pas endommager la turbine 9 et le collecteur d'échappement 8.

De manière encore plus avantageuse, afin de sécuriser davantage le procédé, la consigne de couple ajustée Ca et la première durée Δt1 peuvent être prédéterminées de sorte que pendant la première durée Δt1, la température matière au coeur de la turbine ne dépasse pas une température Tavt,max-m égale à la température maximale admissible en amont de la turbine Tavt,max à laquelle est retranchée une marge prédéterminée.

Lorsque la première durée Δt1 est écoulée, la consigne de couple ajustée est ramenée à la consigne de couple maximal Cmax dans une étape 800. Selon une étape 900, cette consigne de couple maximal Cmax est maintenue tant qu'un enfoncement maximal Emax de la pédale d'accélérateur est détecté.

Lorsque la première durée Δt1 est écoulée, la consigne de couple Ca peut avantageusement être ramenée de façon progressive, par rampage, à la consigne de couple maximal Cmax en une deuxième durée Δt2 prédéterminée. La quantité de carburant Qa et la pression Pcol,a sont progressivement diminuées jusqu'à atteindre la quantité de carburant Qmax et la pression Pcol,max.

La deuxième durée Δt2 est, de préférence, prédéterminée de sorte qu'elle soit suffisamment courte pour éviter que la température matière au coeur de la turbine ne dépasse la température maximale admissible en amont de la turbine Tavt,max avant d'atteindre la consigne de couple maximal Cmax.

De préférence, la consigne est ramenée de façon à ce que l'évolution du couple en fonction du temps soit linéaire afin d'optimiser les performances du moteur 1 aussi longtemps que possible.

Selon une alternative, lorsque la première durée Δt1 est écoulée, la consigne de couple peut être ramenée immédiatement à la consigne de couple maximal Cmax.

De préférence, le dispositif de traction comprend un moyen de mesure en temps réel, tel qu'un capteur, de la température en amont de la turbine. De cette façon, lorsque la consigne de couple ajustée Ca est appliquée, si la valeur mesurée est supérieure à la température en amont de la turbine maximale admissible Tavt,max, la consigne de couple peut immédiatement être ramenée à la consigne de couple maximale Cmax.

Les étapes du procédé de gestion sont contrôlées et réalisées par un calculateur.

Les étapes du procédé seront, de préférence, répétées tout au long du roulage du véhicule automobile. Tout au long du roulage, le degré d'enfoncement de la pédale d'accélérateur sera contrôlé et la consigne de couple ajustée.

Le procédé est avantageusement adapté aux moteurs diesel, et particulièrement sur les moteurs équipés d'un turbocompresseur avec turbine à géométrie variable, très sensible à la température, ou à géométrie fixe.

On pourra toutefois prévoir que le procédé soit adapté à un moteur à essence.

## Revendications

1. Procédé de gestion du couple d'un moteur à combustion interne d'un véhicule automobile équipé d'un turbocompresseur, comprenant les étapes successives suivantes contrôlées par un calculateur :
la détermination (100) d'une consigne de couple initiale (Ci) associée à une température initiale en amont de la turbine du turbocompresseur (Tavt,i) et résultant d'un enfoncement initial (Ei) de la pédale d'accélérateur ;
l'application (200) d'une quantité de carburant (Qi) injecté dans les cylindres du moteur et d'une pression (Pcol,i) régnant dans le collecteur d'admission, répondant à la consigne de couple initiale (Ci) et ;
la détermination (300) d'une consigne de couple maximal (Cmax) associée à une température maximale admissible en amont de la turbine du turbocompresseur (Tavt,max) prédéterminée et résultant d'un enfoncement maximal Emax de la pédale d'accélération ;
l'application (400) d'une quantité de carburant (Qmax) et d'une pression (Pcol,max) répondant à la consigne de couple maximal (Cmax), et le calcul (500) de l'écart entre la température maximale admissible en amont de la turbine (Tavt,max) et la température initiale en amont de la turbine (Tavt,i) ;
lorsque l'écart est supérieur ou égal à un seuil prédéterminé ΔTs, l'application (700) d'une quantité de carburant (Qa) et d'une pression (Pcol,a) correspondant à une consigne de couple ajustée (Ca) supérieure à la consigne de couple maximal (Cmax) pendant une première durée (Δt1) prédéterminée ;
la consigne de couple ajustée (Ca) et la première durée (Δt1) étant prédéterminées de sorte que pendant la première durée (Δt1), la température matière au coeur de la turbine ne dépasse pas la température maximale admissible en amont de la turbine (Tavt,max) ; et
lorsque la première durée (Δt1) est écoulée, la consigne de couple ajustée est ramenée à la consigne de couple maximal (Cmax) tant qu'un enfoncement maximal (Emax) de la pédale d'accélérateur est détecté.

2. Procédé selon la revendication 1, **caractérisé en ce que** lorsque la première durée (Δt1) est écoulée, la consigne de couple est ramenée de façon progressive par rampage à la consigne de couple maximal Cmax en une deuxième durée (Δt2) prédéterminée.

3. Procédé selon la revendication 1, **caractérisé en ce que** lorsque la première durée (Δt1) est écoulée, la consigne de couple est ramenée immédiatement à la consigne de couple maximal (Cmax).

4. Procédé selon l'une quelconque des revendications précédentes, **caractérisé en ce que** la consigne de couple ajustée (Ca) et la première durée (Δt1) sont prédéterminées de sorte que pendant la première durée (Δt1), la température matière au coeur de la turbine ne dépasse pas une température (Tavt,max-m) égale à la température maximale admissible en amont de la turbine (Tavt,max) à laquelle est retranchée une marge prédéterminée.

5. Procédé selon l'une quelconque des revendications précédentes, **caractérisé en ce qu'**il comprend la mesure en temps réel de la valeur de la température en amont de la turbine et, si la valeur mesurée est supérieure à la température en amont de la turbine maximale admissible (Tavt,max) lorsque la consigne de couple ajustée (Ca) est appliquée, la consigne de couple est immédiatement ramenée à la consigne de couple maximale (Cmax).

6. Procédé selon l'une quelconque des revendications précédentes, **caractérisé en ce que** les étapes sont répétées tout au long du roulage du véhicule automobile.

## Patentansprüche

1. Verfahren zum Verwalten des Drehmoments eines Verbrennungsmotors eines Kraftfahrzeugs, das mit einem Turboverdichter ausgerüstet ist, umfassend die folgenden aufeinanderfolgenden Schritte, die durch einen Rechner gesteuert werden:
Bestimmen (100) eines anfänglichen Drehmomentsollwerts (Ci), der einer anfänglichen Temperatur stromaufwärts der Turbine des Turboverdichters (Tavt,i) zugeordnet ist und sich aus einem anfänglichen Niederdrücken (Ei) des Gaspedals ergibt;
Anwenden (200) einer Kraftstoffmenge (Qi), die in die Zylinder des Motors eingespritzt wird, und eines Drucks (Pcol,i), der in dem Einlasskrümmer herrscht, als Reaktion auf den anfänglichen Drehmomentsollwert (Ci) und;
Bestimmen (300) eines maximalen Drehmomentsollwerts (Cmax), der einer maximal zulässigen Temperatur stromaufwärts der Turbine des Turboverdichters (Tavt,max) zugeordnet ist, der vorbestimmt ist und sich aus einem maximalen Niederdrücken Emax des Gaspedals ergibt;
Anwenden (400) einer Kraftstoffmenge (Qmax) und eines Drucks (Pcol,max) als Reaktion auf den maximalen Drehmomentsollwert (Cmax), und Berechnen (500) der Differenz zwischen der maximal zulässigen Temperatur stromaufwärts der Turbine (Tavt,max) und der anfänglichen Temperatur stromaufwärts der Turbine (Tavt,i);
wenn die Differenz größer als oder gleich einem vorbestimmten Schwellenwert ΔTs ist, Anwenden (700) einer Kraftstoffmenge (Qa) und eines Drucks (Pcol,a), die einem angepassten Drehmomentsollwert (Ca) entsprechen, der höher als der maximale Drehmomentsollwert (Cmax) ist, während einer ersten vorbestimmten Dauer (Δt1);
wobei der angepasste Drehmomentsollwert (Ca) und die erste Zeitdauer (Δt1) so vorbestimmt sind, dass während der ersten Zeitdauer (Δt1) die Materialtemperatur mitten in der Turbine die maximal zulässige Temperatur stromaufwärts der Turbine (Tavt,max) nicht überschreitet; und
wenn die erste Dauer (Δt1) verstrichen ist, der angepasste Drehmomentsollwert auf den maximalen Drehmomentsollwert (Cmax) zurückgebracht wird, solange das maximale Niederdrücken (Emax) des Gaspedals erfasst wird.

2. Verfahren nach Anspruch 1, **dadurch gekennzeichnet, dass,** wenn die erste Zeitdauer (Δt1) verstrichen ist, der Drehmomentsollwert durch Schleichen auf den maximalen Drehmomentsollwert Cmax in einer zweiten vorbestimmten Zeitdauer (Δt2) schrittweise zurückgebracht wird.

3. Verfahren nach Anspruch 1, **dadurch gekennzeichnet, dass,** wenn die erste Zeitdauer (Δt1) verstrichen ist, der Drehmomentsollwert sofort auf den maximalen Drehmomentsollwert (Cmax) zurückgebracht wird.

4. Verfahren nach einem der vorstehenden Ansprüche,
**dadurch gekennzeichnet, dass** der angepasste Drehmomentsollwert (Ca) und die erste Zeitdauer (Δt1) so vorbestimmt sind, dass während der ersten Zeitdauer (Δt1) die Materialtemperatur mitten in der Turbine eine Temperatur (Tavt,max-m) gleich der maximal zulässigen Temperatur stromaufwärts der Turbine (Tavt,max) nicht überschreitet, von der eine vorbestimmte Marge abgezogen wird.

5. Verfahren nach einem der vorstehenden Ansprüche,
**dadurch gekennzeichnet, dass** es das Messen des Wertes der Temperatur stromaufwärts der Turbine in Echtzeit umfasst und, falls der gemessene Wert größer als die maximal zulässige Temperatur stromaufwärts der Turbine (Tavt, max) ist, wenn der angepasste Drehmomentsollwert (Ca) angewendet wird, der Drehmomentsollwert sofort auf den maximalen Drehmomentsollwert (Cmax) zurückgebracht wird.

6. Verfahren nach einem der vorstehenden Ansprüche,
**dadurch gekennzeichnet, dass** die Schritte während der gesamten Fahrt des Kraftfahrzeugs wiederholt werden.

## Claims

1. Method for managing the torque of an internal combustion engine of a motor vehicle equipped with a turbocharger, comprising the following successive steps controlled by a computer:
determining (100) an initial torque setpoint (Ci) associated with an initial temperature upstream of the turbocharger turbine (Tavt,i) and resulting from an initial depression (Ei) of the accelerator pedal;
applying (200) a quantity of fuel (Qi) injected into the engine cylinders and a pressure (Pcol,i) prevailing in the intake manifold, corresponding to the initial torque setpoint (Ci) and;
determining (300) a maximum torque setpoint (Cmax) associated with a predetermined maximum permissible temperature upstream of the turbocharger turbine (Tavt,max) and resulting from a maximum depression Emax of the accelerator pedal;
applying (400) a quantity of fuel (Qmax) and pressure (Pcol,max) corresponding to the maximum torque setpoint (Cmax), and calculating (500) the difference between the maximum permissible temperature upstream of the turbine (Tavt,max) and the initial temperature upstream of the turbine (Tavt,i);
when the difference is greater than or equal to a predetermined threshold ΔTs, applying (700) a quantity of fuel (Qa) and a pressure (Pcol,a) corresponding to an adjusted torque setpoint (Ca) greater than the maximum torque setpoint (Cmax) for a first predetermined duration (Δt1);
the adjusted torque setpoint (Ca) and the first duration (Δt1) being predetermined such that during the first duration (Δt1) the material temperature in the turbine core does not exceed the maximum permissible temperature upstream of the turbine (Tavt,max); and
when the first duration (Δt1) has elapsed, the adjusted torque setpoint is brought back to the maximum torque setpoint (Cmax) as long as a maximum depression (Emax) of the accelerator pedal is detected.

2. Method according to claim 1, **characterized in that** when the first duration (Δt1) has elapsed, the torque setpoint is gradually brought back, by ramping, to the maximum torque setpoint Cmax within a predetermined second duration (Δt2).

3. Method according to claim 1, **characterized in that** when the first duration (Δt1) has elapsed, the torque setpoint is immediately brought back to the maximum torque setpoint (Cmax).

4. Method according to any of the preceding claims, **characterized in that** the adjusted torque setpoint (Ca) and the first duration (Δt1) are predetermined such that during the first duration (Δt1), the material temperature in the turbine core does not exceed a temperature (Tavt,max-m) equal to the maximum permissible temperature upstream of the turbine (Tavt,max) from which a predetermined margin is subtracted.

5. Method according to any of the preceding claims, **characterized in that** it comprises real-time measurement of the value of the temperature upstream of the turbine and, if the measured value is greater than the maximum permissible temperature upstream of the turbine (Tavt,max) when the adjusted torque setpoint (Ca) is applied, the torque setpoint is immediately brought back to the maximum torque setpoint (Cmax).

6. Method according to any of the preceding claims, **characterized in that** the steps are repeated throughout the journey of the motor vehicle.
